# EUROPEAN PATENT APPLICATION

(11) **EP 3 267 018 A1**
(43) Date of publication of application: **10.01.2018**
(21) Application number: 16758844.1
(22) Date of filing: 26.02.2016
(51) Int. Cl.: F02D 41/34, F02D 41/02, F02D 41/06, F02D 41/20, F02D 45/00, F02M 51/00

(54) **FUEL INJECTION VALVE, CONTROL DEVICE FOR FUEL INJECTION VALVE, AND CONTROL METHOD**

(30) Priority: 05.03.2015 JP 2015043103
(71) Applicant: Hitachi Automotive Systems, Ltd., Hitachinaka-shi, Ibaraki 312-8503 (JP)
(72) Inventor: ITAYA Takaki, Hitachinaka-shi Ibaraki 312-8503 (JP); KUSAKABE Ryo, Hitachinaka-shi Ibaraki 312-8503 (JP); YAMAOKA Shirou, Hitachinaka-shi Ibaraki 312-8503 (JP); OGURA Kiyotaka, Hitachinaka-shi Ibaraki 312-8503 (JP)
(74) Representative: MERH-IP Matias Erny Reichl Hoffmann Patentanwälte PartG mbB
(86) International application number: PCT/JP2016/055740
(87) International publication number: WO 2016/140150

(57) **Abstract**

The purpose of the present invention is to provide a control means which, with respect to injection control of a fuel injection valve, reduces deviation between an injection quantity of fuel injected by the fuel injection valve and a target value, the deviation being caused due to a pressure in a combustion chamber, as an injection timing in a compression stroke of an engine is retarded.

The present invention pertains to a fuel injection valve that performs a plurality of injections in one engine cycle, and performs control in such a manner that injection pulse signals 603 and 604 are transmitted to a drive circuit, and from the drive circuit for the fuel injection valve that outputs drive current waveforms 605, 606 for fuel injection, the injection pulse signal 612 in the compression stroke when the injection timing is retarded is shortened.

## Description

### Technical Field

The present invention relates to a fuel injection valve, a control device for a fuel injection valve, and a control method.

### Background Art

A fuel injection valve mounted to an internal combustion engine is demanded to inject an appropriate quantity of fuel according to an operating condition, and an instruction for appropriate injection is issued by a fuel injection control device through a means for determining an operating condition. The fuel injection valve is activated to be opened and closed in such a way that a valve element is seated on and separated from a seat by being vertically moved due to magnetic force generated by current supply to a solenoid, and with this activation, the fuel injection valve injects fuel. The output and torque of the internal combustion engine are proportional to the fuel injection quantity, and the fuel injection quantity needs to be appropriately controlled according to an operating condition.

As a method for correcting an influence of pressure in a combustion chamber, a method has been proposed for correcting an injection quantity by a means for measuring and predicting a pressure in a combustion chamber. For example, PTL 1 (JP 2005-105947 A) indicates (see abstract) that "there is provided a technology for controlling a fuel injection quantity that changes with a change in an in-cylinder pressure with improved accuracy. As a solution, in controlling power supply time, a variation in a fuel injection quantity caused by a variation in a fuel injection rate at the in-cylinder pressure of an engine (detected or estimated value in the running state of the internal combustion engine) relative to a fuel injection rate at a reference in-cylinder pressure (under the condition of an injector characteristic measuring benchmark test) is calculated, and in addition, a variation in the fuel injection start timing is corrected. In the calculation of the variation in the fuel injection quantity, a fuel injection rate changing behavior model in which changing behavior of the fuel injection rate is modeled as a trapezoid is used to calculate the areas of Δq1 and Δq2. The variation in the fuel injection start timing Δτd is calculated based on a rail pressure and the variation in the in-cylinder pressure".

In addition, PTL 2 (JP H09-256886 A) indicates (see abstract) that "In a fuel injection control device for a direct injection type engine, a fuel injection quantity is precisely controlled without using an in-cylinder pressure sensor. As a solution, the fuel injection control device is provided with: an in-cylinder pressure computing means 104, which computes a pressure Pc inside the cylinder according to the detected operating condition; a differential pressure computing means 105 that computes a differential pressure Pf between the computed in-cylinder pressure Pc and a pressure of fuel fed to an injector 101; a fuel injection rate computing means 106 that computes a fuel injection rate K on the basis of the computed differential pressure Pf; and a fuel injection quantity correction means 107 that corrects a valve opening time Ti of the injector 101 on the basis of the computed fuel injection rate K".

### Citation List

### Patent Literature

PTL 1: JP 2005-105947 A
PTL 2: JP H09-256886 A

### Summary of Invention

### Technical Problem

Force exerted on a valve element of a fuel injection valve includes force of a spring which is a component of the fuel injection valve and a fuel pressure in a direction of closing the valve element, and magnetic force generated by supply of current to a solenoid in a direction of opening the valve element. Further, a valve element of a fuel injection valve that directly injects fuel into a combustion chamber receives a pressure in the combustion chamber. Particularly, the pressure received by the valve element of the fuel injection valve is different between at an injection timing being in an engine intake stroke and an injection timing being in an engine compression stroke. In the injection in the compression stroke, the valve element, which is open inward and faces the combustion chamber, of the fuel injection valve receives force in the direction of opening the valve element. The present inventors have found that, a time at which the valve element opens becomes earlier or a time at which the valve element closes is delayed by force applied in the direction of opening the valve element, and therefore, a fuel injection quantity may be more than the fuel injection quantity expected in advance based on drive current supplied to the fuel injection valve.

Neither PTL 1 (JP 2005-105947 A) nor PTL 2 (JP H09-256886) described above indicates that a fuel injection rate and fuel injection timing are corrected on the basis of an in-cylinder pressure which is a reference for an injection start timing, and an injection quantity is changed by an application of force in a direction of opening the valve element due to the in-cylinder pressure during a compression stroke rather than during an intake stroke in an engine cycle. A method for correcting the injection rate and the injection timing by means of an injection signal is disclosed. However, there arises a problem such that, only by controlling a time for supplying current to the fuel injection valve, the magnetic force to the valve element varies, so that a time at which the valve element opens or a time at which the valve element closes is changed to vary an injection quantity.

Particularly, at half lift, opening of the fuel injection valve is not accompanied by collision of the valve element, and when a valve element position is specified before the valve element is fully open, the relation of force exerted on the valve element determines an open position of the valve element and an injection quantity, so that the injection quantity becomes larger due to the influence of force received from the combustion chamber.

In view of this, an object of the present invention is to suppress deviation of a quantity of fuel injected in intake, compression, and expansion strokes in an engine cycle from a target injection quantity according to an injection timing, considering force from a combustion chamber to a valve element of a fuel injection valve that directly injects fuel to the combustion chamber.

### Solution to Problem

In order to achieve the above object, the present invention provides a control device for a fuel injection valve that performs a plurality of injections in one cycle, the control device including a control unit that controls a time for supplying drive current to the fuel injection valve, wherein the control unit controls so that, when fuel is injected in a compression stroke, a time for supplying drive current for injection at a second injection timing later than a first injection timing is shorter than a time for supplying drive current for injection at the first injection timing.

### Advantageous Effects of Invention

According to the control device for a fuel injection valve in the present invention, deviation between an injection quantity of fuel injected from the fuel injection valve in a compression stroke and a target value can be suppressed. The foregoing and other objects, features and advantages of the invention will be apparent from the following description of preferred embodiments.

### Brief Description of Drawings

[FIG. 1] FIG. 1 is a diagram illustrating a configuration of an engine system.
[FIG. 2] FIG. 2 is a diagram illustrating a configuration of a fuel injection valve.
[FIG. 3] FIG. 3 is a diagram illustrating a drive current waveform when the fuel injection valve is at full lift.
[FIG. 4] FIG. 4 is a diagram illustrating a drive current waveform when the fuel injection valve is at half lift.
[FIG. 5] FIG. 5 is a method for controlling the fuel injection valve when a pressure received by the fuel injection valve from a combustion chamber is not considered.
[FIG. 6] FIG. 6 is a control method when the fuel injection valve is at full lift in a first embodiment.
[FIG. 7] FIG. 7 is a control method when the fuel injection valve is at half lift in the first embodiment.
[FIG. 8] FIG. 8 is a flowchart in the first embodiment.

### Description of Embodiment

An embodiment of a fuel injection valve according to the present invention will be described below in detail with reference to the drawings.

### Embodiment

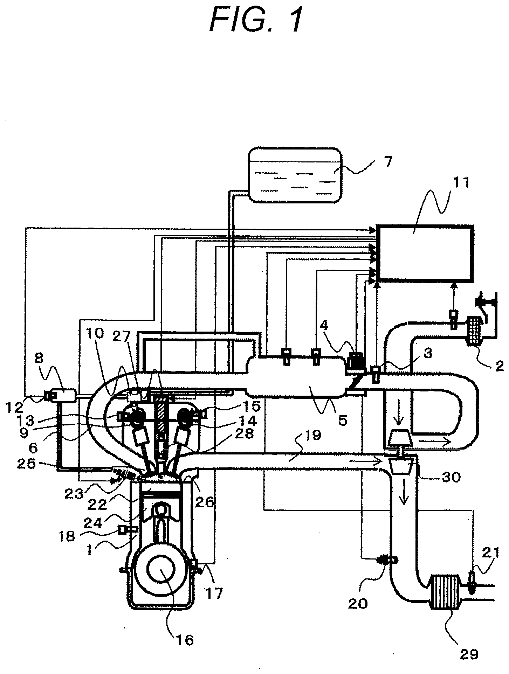

An embodiment of the present invention will be described with reference to the drawings. FIG. 1 is a diagram illustrating a configuration example of an engine system to which the present embodiment is applied. In the present embodiment, an engine with one or more cylinders is supposed. However, one cylinder is illustrated in the drawings for description. Firstly, the basic operation of an engine 1 will be described. Air sucked by the engine 1 passes through an air cleaner 2, and compressed by a supercharger 30. The supercharger 30 is configured such that a turbine on an intake side is simultaneously rotated with the rotation of a turbine on an exhaust side which is rotated by exhaust gas from the engine, thereby pressure-feeding the intake air into an intake pipe.

Further, an amount of intake air is measured by an airflow sensor 3 mounted on an intake duct. The amount of air sucked by the engine 1 is controlled by a throttle valve 4. An intake collector 5 distributes air to other cylinders not illustrated, and after passing through the intake collector 5, air is distributed to intake pipes of the respective cylinders, and sucked into a combustion chamber 22 through an intake valve 25. An unillustrated airflow control valve for imparting directionality to airflow may be provided on the intake pipe 6. Fuel is transported through a fuel path in such a way that the fuel transported under pressure into a fuel pipe from a fuel tank 7 by projection of an unillustrated low-pressure fuel pump is transported to a common rail 8. The fuel is also pressurized and accumulated by a high-pressure fuel pump 10 provided to an intake cam shaft 9.

An engine control unit (hereinafter referred to as an ECU) 11 determines an operating condition of the engine 1 in the ECU 11 based on signals from various sensors mounted to the engine 1, and outputs instruction values appropriate for the determined operating condition to various actuators. Examples of various sensors include: the airflow sensor 3; a fuel pressure sensor 12 provided to the common rail 8 for detecting a pressure of fuel; a phase sensor 13 for detecting a phase of the intake cam 9; a phase sensor 15 for detecting a phase of an exhaust cam 14; a crank angle sensor 17 for detecting a rotational speed of a crankshaft 16; a water temperature sensor 18 for detecting a temperature of engine cooling water; a knock sensor (not illustrated) for detecting knocking; and an exhaust gas sensor (exhaust A/F sensor 20, exhaust O2 sensor 21) for detecting a concentration of exhaust gas in an exhaust pipe 19. Further, examples of various actuators include a fuel injection valve 23, the high-pressure fuel pump 10, the throttle valve 4, an airflow control valve (not illustrated), a phase control valve (not illustrated) for controlling phases of intake and exhaust cams, and an ignition coil 28.

In the light of the operating configuration of the engine 1, a control unit (microcontroller) of the ECU 11 receives an air amount measured by the airflow sensor 3 and signals from the exhaust A/F sensor 20 and the exhaust O2 sensor 21 to calculate a fuel injection quantity of the fuel injection valve 23. The control unit (microcontroller) in the ECU 11 also detects, by means of the fuel pressure sensor 12, the pressure of the fuel pressurized by the high-pressure pump 10, and determines an injection period (injection pulse width) of the fuel injection valve 23 on the basis of the calculated fuel injection quantity of the fuel injection valve 23 and the detected fuel pressure. An injection pulse signal is transmitted to an unillustrated drive circuit for the fuel injection valve 23 from the ECU 11, and drive current is outputted from the drive circuit for the fuel injection valve 23 to the fuel injection valve 23, whereby the fuel injection valve 23 injects the fuel.

The drive signal transmitted from the ECU 11 mainly includes an injection timing, the number of times of injection, and an injection period. In the present embodiment, the detail of the injection pulse signal will be described later. Air and fuel supplied to the combustion chamber 22 are vaporized and mixed in the combustion chamber 22 with the vertical movement of a piston 24, forming an air fuel mixture. Then, the temperature and pressure rise due to the compression operation of the piston 24. The ECU 11 calculates an ignition timing from information such as the engine speed and the fuel injection quantity, and outputs an ignition signal to the ignition coil 27. The ignition signal mainly includes a start timing of current supply and an end timing of current supply to the ignition coil 27.

Accordingly, ignition is performed by an ignition plug 28 at a timing slightly before the compression top dead center of the piston 24, so that the air fuel mixture in the combustion chamber 22 is ignited and combustion occurs. The ignition timing may be after the compression top dead center, because the ignition timing differs according to an operating condition. Force for pushing back the piston 24 downward is applied due to the increased pressure by the combustion, and this force is transmitted to the crankshaft 16 as engine torque during the expansion stroke and becomes engine power. After the combustion, gas remaining in the combustion chamber 22 is discharged to the exhaust pipe 19 through the exhaust valve 26. This exhaust gas often includes components harmful to humans. Therefore, this exhaust gas is detoxified by the action of a catalyst 29 disposed on the exhaust pipe 19, and then, discharged in the atmosphere.

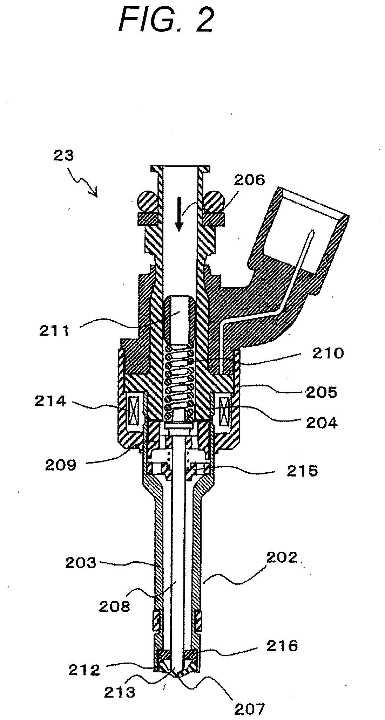

Next, the detailed configuration of the fuel injection valve 23 according to the present embodiment will be described with reference to FIG. 2. Note that the fuel injection valve used for description in FIG. 2 is only illustrative, and the fuel injection valve is not limited to have the configuration described here. In the fuel injection valve 23 illustrated in FIG. 2, a valve body 202 includes a nozzle holder 203, a core 204, and a housing 205. The fuel from the high-pressure fuel pump 10 in FIG. 1 is discharged from a plurality of fuel injection holes 207 through the fuel path 206. A valve element 208 is stored in the nozzle holder 203 through an anchor 209 so as to be slidable in the axial direction. A spring 210 is disposed between the valve element 208 and an adjuster pin 211, and the position of an upper end of the spring 210 is restrained by the adjuster pin 211. The fuel injection hole 207 is closed when the spring 210 presses the valve element 208 against a seat 213 of a seat member 212. A solenoid 214 is disposed above the anchor 209, and is energized by receiving drive current from the drive circuit 11 in FIG. 1. Thus, the core 204 is excited to generate magnetic attraction force, thereby pulling up the anchor 209 in the axial direction. With this, the valve element 208 is pulled up in the axial direction by the anchor 209. At this time, the valve element 208 is separated from the seat 213, and guides 215 and 216 guide the valve element 208 in the sliding direction. Then, the plurality of fuel injection holes 207 are opened, and the fuel pressurized and press-fed by the high-pressure fuel pump 10 in FIG. 1 is injected through the fuel path 206.

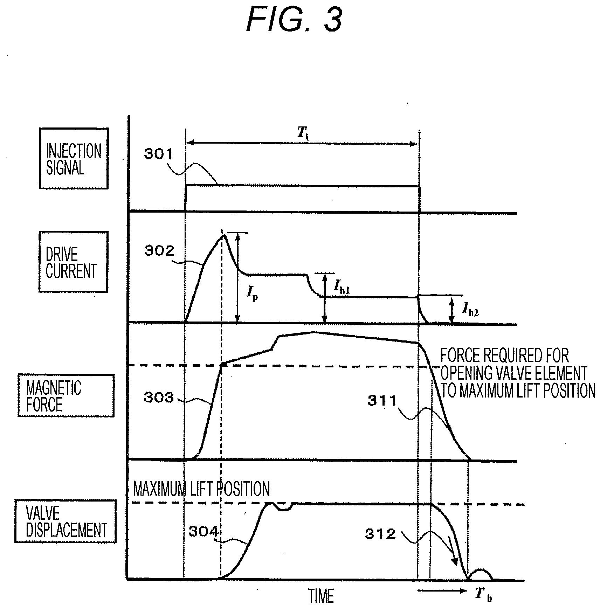

FIG. 3 relates to control signals of the fuel injection valve 23, and illustrates, from the top, an injection pulse signal 301, drive current 302, magnetic force 303 generated by current supply to the solenoid 214 in the fuel injection valve in FIG. 2, and displacement 304 of the valve element 208 in the fuel injection valve in the height direction (vertical direction in FIG. 2). The control waveforms in FIG. 3 do not limit the configuration of the control in the present embodiment, because the drive waveform, the current waveform, and the displacement of the fuel injection valve vary depending on a system configuration and the configuration of a fuel injection valve.

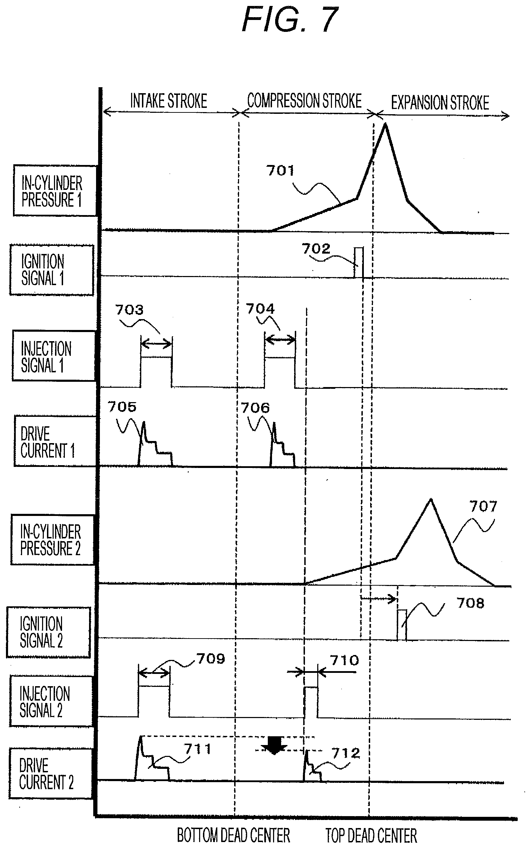

The ECU 11 in FIG. 1 detects a required injection quantity from the detection result of the operating condition received from various sensors, and determines the injection pulse signal 301 in FIG. 3. Note that the flow before the determination of the drive waveform will be described with reference to a step chart in FIG. 7 described later. The injection pulse signal 301 is outputted from the ECU 11 in FIG. 1, and the drive current 302 is outputted from the drive circuit for the fuel injection valve not illustrated in FIG. 1. Thus, the solenoid 214 in the fuel injection valve 23 in FIG. 2 is energized and excited, whereby the magnetic force 303 in FIG. 3 is generated.

Each signal will be described in detail. The control unit (microcontroller) in the ECU 11 outputs the injection pulse signal 301 to the unillustrated drive circuit, and the drive circuit receiving this injection pulse signal 301 outputs drive current with the drive current waveform 302 to the solenoid 214 . As indicated by the drive current waveform 302, the drive current increases until reaching the maximum drive current value Ip after being supplied. Thus, the magnetic force 303 generates magnetic force sufficient for opening the valve element 208 in FIG. 2. Accordingly, the valve element 208 in FIG. 2 is activated with a certain delay from the magnetic force as in the valve displacement 304 in FIG. 3, so that the anchor 209 and the core 204 in FIG. 2 collide against each other and the valve element 208 is opened up to a maximum lift position in the valve displacement 304 in FIG. 3.

Then, the control unit (microcontroller) in the ECU 11 controls so that the drive current keeps a first drive current value Ih1 which is smaller than the maximum drive current value Ip and required for keeping the valve element open, after the drive current reaches the maximum drive current value Ip. Thereafter, the control unit (microcontroller) in the ECU 11 controls so that the drive current keeps a second drive current value Ih2 which is smaller than the first drive current value Ih1 and required for keeping the valve element open. Thus, the magnetic force 303 continuously keeps enough magnetic force to open the valve element. In this case, the solenoid 214 in FIG. 2 has surplus magnetic force relative to the enough magnetic force to open the valve element, in consideration of individual variation in force for closing the valve element 208 and variation in magnetic force. Subsequently, when the injection pulse signal 301 is ended, the value of the current with the drive current waveform 302 also becomes zero. Thus, the magnetic force 303 also becomes zero with a certain delay from the current with the drive current waveform 302. Because the magnetic force 303 gradually becomes zero with magnetic force 311 upon closing the valve element, the valve displacement 304 is lowered as indicated by a valve displacement 312 to be on a position where the valve element is closed.

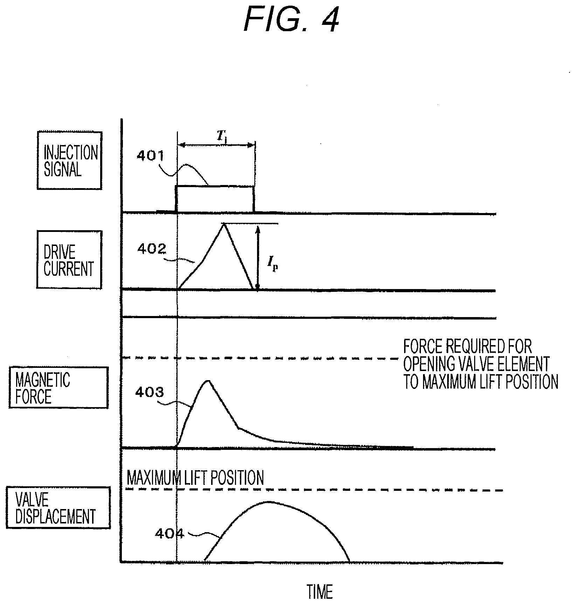

Next, FIG. 4 shows an injection pulse signal 401, drive current 402, magnetic force 403, and a valve displacement 404 of the fuel injection valve, similar to those in FIG. 3, when the valve element 208 of the fuel injection valve in FIG. 2 is at half lift. As in FIG. 3, the waveforms in the control in the present embodiment do not limit the control. The control unit (microcontroller) in the ECU 11 outputs the injection pulse signal 401 to the unillustrated drive circuit, and the drive circuit receiving this injection pulse signal 401 outputs drive current with the drive current waveform 402 to the solenoid 214. As in FIG. 3, the magnetic force 403 is generated when the drive current 402 is supplied to the solenoid, and this is magnetic force for the valve element 208 to start opening. With the drive current 402 in FIG. 4, the valve element 208 reaches a position lower than a maximum height position. Alternatively, the anchor 209 reaches a position lower than a position where the anchor 209 collides against the core 204. Therefore, after the valve element 208 or the anchor 209 reaches an intermediate height position, the valve element 208 starts closing without reaching the maximum height position or with the anchor 209 not colliding against the core 204.

The quantity of fuel injected here is determined by an opening amount and an opening time of the valve element 208 of the fuel injection valve, and the differential pressure between the fuel pressure exerted on the valve element of the fuel injection valve and the pressure in the combustion chamber into which the fuel is to be injected by the fuel injection valve.

On the other hand, besides the fuel pressure, biasing force of the spring 210 and the magnetic force are exerted on the valve element 208 for closing the valve element 208. Therefore, closing force is exerted on the valve element, regardless of the driving condition of the vehicle. The current supply to the solenoid 214 in the fuel injection valve is performed so that magnetic force is generated, for opening the valve element, so as to overcome the fuel pressure controlling a fuel quantity to obtain required output and torque and force of the spring constituting the fuel injection valve for closing the valve element.

Therefore, to open the valve element, it is necessary to generate, by means of the solenoid, magnetic force exceeding a total value of the fuel pressure according to the respective operating conditions and the force for closing the valve element due to the spring force and the magnetic force dependent on the structure of the fuel injection valve. When the valve element is closed, the spring force and the fuel pressure are exerted in the direction of closing the valve element, and remaining surplus magnetic force due to the current supply to the solenoid is exerted in the direction of opening the valve element. In addition, if fuel is directly injected into the combustion chamber, the pressure in the combustion chamber is greatly exerted in the direction of opening the valve element. Therefore, to reliably close the valve element, it is general that the spring, which is a component of the fuel injection valve, is designed to have larger force for reliably closing the valve element.

However, in the fuel injection valve which directly injects fuel into the combustion chamber, the pressure in the combustion chamber is exerted to the valve element in the direction of opening the valve element, as well as the fuel pressure, the magnetic force due to the solenoid, and the force of the spring provided to the fuel injection valve. It is to be noted that the generation of force in the direction of closing the valve element due to negative pressure during the intake stroke is not described here for simplifying the description, since the generation of this force occurs less. The present inventors have found that, according to this, the time in which the valve element is open becomes short, and the time in which the valve element closes becomes long. Particularly, the effect caused by the pressure in the combustion chamber which is higher in the compression stroke than in the intake stroke is great in one engine cycle including intake, compression, expansion, and exhaust strokes. Note that 4-stroke engine is described here for simplifying the description. In addition, the detailed description for the injection in the expansion stroke will not be described here.

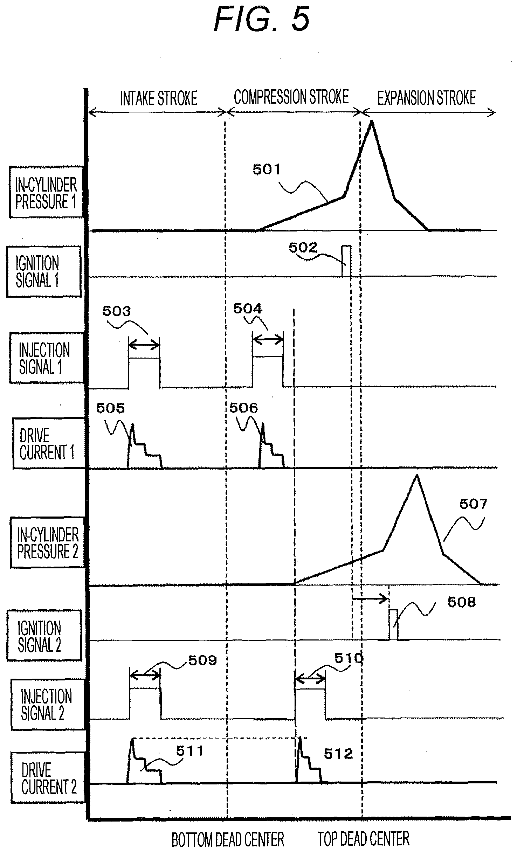

In the control for the fuel injection valve which performs a plurality of injections in one engine cycle, a timing at which the valve element opens may be earlier due to the effect of the injection in the compression stroke, and therefore, in this case, the actual injection quantity may be deviated from a target injection quantity which has been set. Next, a method for controlling the fuel injection valve when the pressure received by the fuel injection valve from the combustion chamber is not considered will be described with reference to FIG. 5. FIG. 5 illustrates, from the top, a pressure (hereinafter referred to as an in-cylinder pressure) 501 in the combustion chamber in the engine, an ignition signal 502, injection pulse signals 503 and 504 when a plurality of injections are performed, and drive currents 505 and 506. The injection pulse signals 503 and 504 indicate signals issued from the ECU 11 when a plurality of injections is performed in one engine cycle. Although the number of times of injection may be set to be three or more, it will be described below that the injection is performed twice in one engine cycle for facilitating understanding.

The in-cylinder pressure 507 indicates a pressure in the cylinder, and the ignition signal 508 indicates an engine ignition timing when the ignition timing is retarded to increase the temperature of the catalyst. The injection pulse signals 509 and 510 indicate injection pulse signals when the pressure received by the fuel injection valve from the combustion chamber is not considered, and the injection pulse signal 510 is transmitted at a timing later than the timing at which the injection pulse signal 504 is transmitted. In addition, the drive currents 511 and 512 indicate drive currents transmitted to the solenoid 214 from the drive circuit that receives the injection pulse signals 509 and 510.

As described above, it is necessary to retard the ignition timing to increase the temperature of the catalyst, and thus to form an air fuel mixture and perform ignition at the retarded ignition timing. For this end, the injection timing needs to be retarded from 504 to 510. In FIG. 5, the width of the injection pulse signal 510 indicates that the injection is executed without any change from the signal set by the injection pulse signal 504.

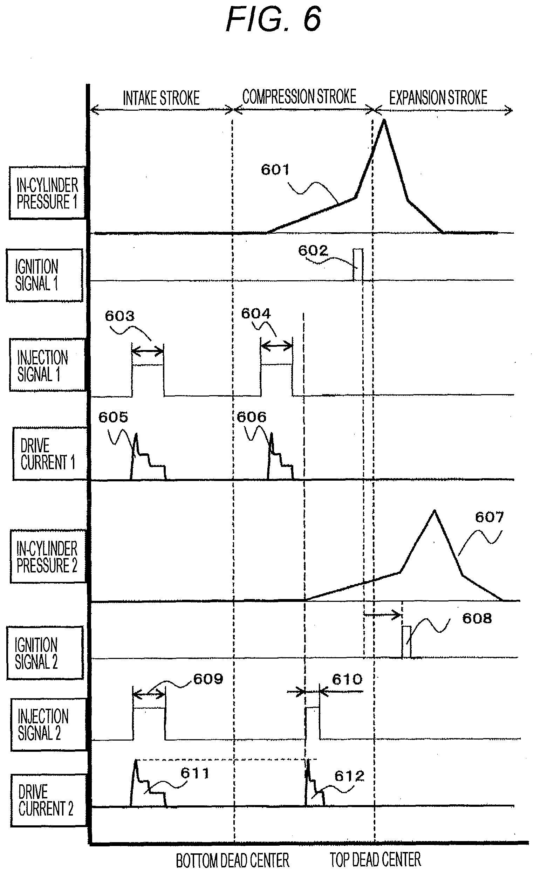

However, as described above, there arises a problem such that the injection quantity increases relative to the target injection quantity because force in the direction of opening the valve element is exerted on the valve element of the fuel injection valve by the in-cylinder pressure due to the retardation of the injection timing. The control for the fuel injection valve according to the present embodiment to address this problem will be described with reference to FIG. 6.

FIG. 6 illustrates a timing of injection of fuel to the engine and the control method when the fuel injection valve in FIG. 3 is at full lift. Various reference signs in FIG. 6 will be described. Similar to FIG. 5, FIG. 6 illustrates, from the top, an in-cylinder pressure 601, an ignition signal 602 for describing an ignition timing, injection pulse signals 603 and 604 indicating supply of current to the fuel injection valve, and drive currents 605 and 606. In FIG. 6, respective reference signs indicate an in-cylinder pressure 607, an ignition signal 608, injection pulse signals 609 and 610, and drive currents 611 and 612 when the control according to the present embodiment is performed.

The control method in the present embodiment illustrated in FIG. 6 will be described in detail. The injection pulse signals 603 and 604 are transmitted to the drive circuit according to the instruction from the control unit in the ECU 11, and the drive circuit supplies the drive currents 605 and 606 to the solenoid 214 so as to inject fuel in a target injection quantity into the combustion chamber of the engine based on the injection pulse signals 603 and 604. Thus, the valve element 208 of the fuel injection valve is open, and the fuel is injected. After the injection based on the injection pulse signal 603 for performing injection in the intake stroke and the injection based on the injection pulse signal 604 for performing injection in the compression stroke are executed, the air-fuel mixture of the injected fuel and sucked air is ignited by the ignition plug 28 in FIG. 1 based on the ignition signal 602.

Then, it is determined whether or not a target combustion state is achieved based on the signals from the exhaust A/F sensor 20 and the exhaust O2 sensor 21 and the crank angle sensor 17 in FIG. 1, for example. When the ECU 11 determines that a target operating state is not achieved as a result of the determination, and the injection timing is retarded toward the top dead center, the injection pulse signal 604 is shortened as in the injection pulse signal 610. Specifically, when fuel is injected in the compression stroke by the fuel injection valve which performs a plurality of injections in one cycle, such control is performed that a time for supplying drive current is shortened as an injection start timing is retarded.

More specifically described, when fuel is injected in the compression stroke, the control unit in the ECU 11 for the fuel injection valve in the present embodiment controls so that a time for supplying the drive current 612 for the injection at a second injection timing of the injection pulse signal 610 later than a first injection timing of the injection pulse signal 604 becomes shorter than a time for supplying the drive current 606 for the injection at the first injection timing of the injection pulse signal 604.

In other words, when fuel is injected in the compression stroke, the control unit in the ECU 11 controls so that the width of the injection pulse signal 610 for the drive current 612 for the injection at the second injection timing later than the first injection timing becomes smaller than the width of the injection pulse signal 604 for the drive current 606 for the injection at the first injection timing.

This control is especially effective when being executed together with retarding the ignition timing for raising the temperature of the catalyst, in injecting fuel in the compression stroke in fast idling at engine startup. That is, according to this control, the injection quantity can be less deviated from the target value, whereby an effective operating region can be achieved. In fast idling, an operation in which A/F is lean with less required injection quantity is performed such as stratified combustion, and injection is performed frequently in the compression stroke. Therefore, unless the control according to the present embodiment is performed, deviation of an injection quantity becomes a problem.

When the engine to which the fuel from the fuel injection valve is discharged is operated in a full-open operating region and the fuel is injected in the compression stroke, an in-cylinder pressure is particularly likely to increase. Therefore, if fuel is injected based on the injection pulse signal 510 illustrated in FIG. 5, the timing at which the valve element opens becomes early, entailing a problem of deviation of the actual injection quantity from the target injection quantity.

In view of this, the control unit in the ECU 11 may apply the control in FIG. 6, when the engine to which the fuel from the fuel injection valve is discharged is operated in a full-open operating region and the fuel is injected in the compression stroke. Thus, the deviation of the actual injection quantity relative to the target injection quantity can be reduced. Further, this control is quite effective for an engine provided with a supercharger, because the pressure in a combustion chamber in the compression stroke becomes high, and force applied to a valve element also becomes high. In addition, the control unit in the ECU 11 may apply the control in FIG. 6, when knocking of the engine to which the fuel from the fuel injection valve is discharged is detected, and the fuel is injected in the compression stroke. When knocking is detected, the ignition timing is retarded and the injection timing is also retarded simultaneously, to reduce the pressure in the combustion chamber to avoid the knocking. In this case, if the control in the present embodiment is not performed, the injection quantity is deviated from the target value.

Next, FIG. 7 illustrates a control method when the valve element 208 is driven at half lift. The half lift indicates that the valve element of the fuel injection valve is moved to a position lower than the maximum height position, and the height position of the valve element is controlled within the intermediate region. Respective reference signs in FIG. 7 indicate, from the top, an in-cylinder pressure 701, an ignition timing 702, injection pulse signals 703 and 704, and drive currents 705 and 706.

In addition, respective reference signs in FIG. 7 indicate an in-cylinder pressure 707, an ignition timing 708, an injection pulse signal 709 for injection in an intake stroke among a plurality of injections, and an injection pulse signal 710 for injection in a compression stroke, when the control according to the present embodiment is performed in half-lift control. Similarly, reference sign 711 indicates drive current to be supplied to the fuel injection valve in the intake stroke, and reference sign 712 indicates drive current to be supplied to the fuel injection valve in the compression stroke.

At half lift, not only the opening of the valve element and the speed of opening the valve element but also the height of the valve element are increased unintentionally. In view of this, in the present embodiment, the maximum drive current becomes smaller as the injection start timing is retarded as illustrated in FIG. 7, when the valve element 208 of the fuel injection valve is driven at half lift in the compression stroke. That is, the drive circuit causes the maximum value of the drive current 712 to be smaller than the maximum value of the drive current 706 according to the injection pulse signal 710.

More specifically described, the control unit in the ECU 11 controls so that, when the valve element 208 of the fuel injection valve is moved to a position lower than the maximum height position in the compression stroke, the maximum value of the drive current 712 for the injection at a second injection timing of the injection pulse signal 710 later than a first injection timing of the injection pulse signal 704 becomes smaller than the maximum value of the drive current 706 for the injection at the first injection timing.

It is to be noted that, in this case, the control unit in the ECU 11 may control so that the time for supplying the drive current 712 for injection at the second injection timing of the injection pulse signal 710 later than the first injection timing of the injection pulse signal 704 becomes shorter than the time for supplying the drive current 706 for injection at the first injection timing, as in FIG. 6. Alternatively, the control unit may control so that the width of the injection pulse signal 710 for the drive current 712 for injection at the second injection timing later than the first injection timing becomes smaller than the width of the injection pulse signal 704 for the drive current 706 for injection at the first injection timing.

In addition, the control unit in the ECU 11 may control the drive current so that the fuel injection valve is driven by the same maximum drive current in a plurality of injections, when the valve element of the fuel injection valve is moved to the maximum height position, that is, the valve element 208 is driven at full lift, in the compression stroke. At full lift, the same maximum drive current is supplied to excessively provide magnetic attraction force generated by the solenoid, by which the amount of change in the time in which the valve element is open and the speed for opening the valve element is reduced.

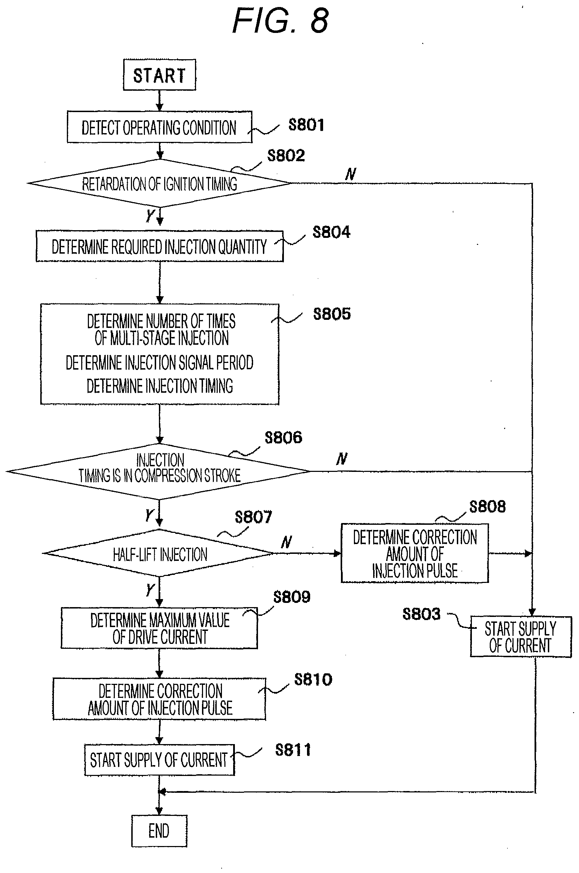

Next, the flow of the control according to the present embodiment will be described with reference to a flowchart in FIG. 8. In S801, an operating condition is determined based on outputs from various sensors described with reference to FIG. 1. Then, in S802, it is determined whether or not the ignition timing is retarded. If No (N), current is supplied to the fuel injection valve without changing the injection pulse and the drive current. If it is determined in 802 that the ignition timing is retarded (Y), the number of times of multistage injection, injection period, and injection timing are determined in S805. Then, in step S806, it is determined whether or not the injection period of the multistage injection is in the compression stroke. If it is not in the compression stroke (N), current is supplied to the fuel injection valve without changing the injection pulse and the drive current in S803. When the injection period is determined to be in the compression stroke in S806, it is then determined in S807 whether or not the fuel injection valve is at half lift. If No (N), a correction amount for full lift is determined in S808, and current supply is started in S803. When the fuel injection valve is determined to be at half lift (Y) in S807, control for lowering the maximum value of the drive current is performed in S809, a correction amount of the injection pulse is determined in S810, and current supply to the fuel injection valve is started in S811.

According to the control device for a fuel injection valve in the present embodiment described above, deviation between an injection quantity of fuel injected by the fuel injection valve in the compression stroke and a target value can be suppressed, whereby an internal combustion engine having enhanced fuel economy performance and exhaust performance can be implemented.

### Reference Signs List

- 11: engine control unit (ECU)
- 12: fuel pressure sensor
- 23: fuel injection valve
- 202: valve body
- 204: core
- 208: valve element
- 209: anchor
- 210: spring
- 212: seat member
- 213: seat
- 214: solenoid
- 301: injection pulse signal
- 302: drive current
- 303: magnetic force
- 304: valve displacement
- S801: step of detecting operating condition
- S802: determination of retardation of ignition timing
- S806: determination of injection in compression stroke
- S807: determination of half lift

## Claims

1. A control device for a fuel injection valve that performs a plurality of injections in one cycle, the control device comprising:
a control unit that controls a time for supplying drive current to the fuel injection valve,
wherein the control unit controls so that, when fuel is injected in a compression stroke, a time for supplying drive current for injection at a second injection timing later than a first injection timing is shorter than a time for supplying drive current for injection at the first injection timing.

2. A control device for a fuel injection valve that performs a plurality of injections in one cycle, the control device comprising:
a control unit that controls a pulse width for supplying drive current to the fuel injection valve,
wherein the control unit controls so that, when fuel is injected in a compression stroke, a pulse width for supplying drive current for injection at a second injection timing later than a first injection timing is smaller than a pulse width for supplying drive current for injection at the first injection timing.

3. The control device for a fuel injection valve according to claim 1,
wherein the control unit controls so that, when fuel is injected in a compression stroke in fast idling of an engine, a time for supplying drive current for injection at the second injection timing later than the first injection timing is shorter than a time for supplying drive current for injection at the first injection timing.

4. The control device for a fuel injection valve according to claim 2,
wherein the control unit controls so that, when fuel is injected in a compression stroke in fast idling of an engine, a pulse width for supplying drive current for injection at the second injection timing later than the first injection timing is smaller than a pulse width for supplying drive current for injection at the first injection timing.

5. The control device for a fuel injection valve according to claim 1,
wherein the control unit controls so that, when moving a valve element of the fuel injection valve to a position lower than a maximum height position in a compression stroke, a time for supplying drive current for injection at the second injection timing later than the first injection timing is shorter than a time for supplying drive current for injection at the first injection timing.

6. The control device for a fuel injection valve according to claim 2,
wherein the control unit controls so that, when moving a valve element of the fuel injection valve to a position lower than a maximum height position in a compression stroke, a pulse width for supplying drive current for injection at the second injection timing later than the first injection timing is smaller than a pulse width for supplying drive current for injection at the first injection timing.

7. The control device for a fuel injection valve according to claim 1,
wherein the control unit controls so that, when knocking of an engine to which fuel from the fuel injection valve is discharged is detected and fuel is injected in a compression stroke, a time for supplying drive current for injection at the second injection timing later than the first injection timing is shorter than a time for supplying drive current for injection at the first injection timing.

8. The control device for a fuel injection valve according to claim 2,
wherein the control unit controls so that, when knocking of an engine to which fuel from the fuel injection valve is discharged is detected and fuel is injected in a compression stroke, a pulse width for supplying drive current for injection at the second injection timing later than the first injection timing is smaller than a pulse width for supplying drive current for injection at the first injection timing.

9. The control device for a fuel injection valve according to claim 1,
wherein the control unit controls so that, when an engine to which fuel from the fuel injection valve is discharged is operated in a full-open operating region and fuel is injected in a compression stroke, a time for supplying drive current for injection at the second injection timing later than the first injection timing is shorter than a time for supplying drive current for injection at the first injection timing.

10. The control device for a fuel injection valve according to claim 2,
wherein the control unit controls so that, when an engine to which fuel from the fuel injection valve is discharged is operated in a full-open operating region and fuel is injected in a compression stroke, a pulse width for supplying drive current for injection at the second injection timing later than the first injection timing is smaller than a pulse width for supplying drive current for injection at the first injection timing.

11. The control device for a fuel injection valve according to claim 1 or 2,
wherein the control unit drives the fuel injection valve at same maximum drive current in a plurality of injections when moving a valve element of the fuel injection valve to a maximum height position in a compression stroke.

12. The control device for a fuel injection valve according to claim 1 or 2,
wherein an engine to which fuel from the fuel injection valve is discharged is provided with a supercharger.

13. The control device for a fuel injection valve according to claim 1 or 2, wherein the fuel injection valve is of a direct fuel injection type that directly injects fuel into a fuel chamber of an engine.

14. A fuel injection valve that performs a plurality of injections in one cycle,
wherein, when fuel is injected in a compression stroke, a time for supplying drive current for injection at a second injection timing later than a first injection timing is shorter than a time for supplying drive current for injection at the first injection timing.

15. The fuel injection valve according to claim 1,
wherein, when fuel is injected in a compression stroke in fast idling of an engine, a time for supplying drive current for injection at the second injection timing later than the first injection timing is shorter than a time for supplying drive current for injection at the first injection timing.

16. A control method for a fuel injection valve that performs a plurality of injections in one cycle,
wherein, when fuel is injected in a compression stroke, a time for supplying drive current for injection at a second injection timing later than a first injection timing is set to be shorter than a time for supplying drive current for injection at the first injection timing.

17. A control method for a fuel injection valve that performs a plurality of injections in one cycle,
wherein, when fuel is injected in a compression stroke, a pulse width for supplying drive current for injection at a second injection timing later than a first injection timing is set to be smaller than a pulse width for supplying drive current for injection at the first injection timing.
